# EUROPEAN PATENT APPLICATION

(11) **EP 2 180 325 A1**
(43) Date of publication of application: **28.04.2010**
(21) Application number: 08791556.7
(22) Date of filing: 24.07.2008
(51) Int. Cl.: G01N 35/02, G01N 1/00

(54) **CLEANING DEVICE AND ANALYSIS DEVICE**

(30) Priority: 24.07.2007 JP 2007192244
(71) Applicant: Beckman Coulter, Inc., Brea, CA 92821 (US)
(72) Inventor: TSURUTA, Hiroshi, Sunto-gun, Shizuoka 4110931 (JP); OZAKI, Motoaki, Sunto-gun, Shizuoka 4110931 (JP); NISHIMURA, Isao, Sunto-gun, Shizuoka 4110931 (JP); TAKEYA, Mariko, Sunto-gun, Shizuoaka 4110931 (JP)
(74) Representative: Müller-Boré & Partner Patentanwälte
(86) International application number: PCT/JP2008/063304
(87) International publication number: WO 2009/014181

(57) **Abstract**

A cleaning device and an analyzer capable of reducing an amount of cleaning liquid required for cleaning a cuvette are provided. In the analyzer according to the present invention, wall cross-sectional areas (S12) and (S22) are made larger than respective inner-diameter cross-sectional areas (S11) and (S21) of the supply nozzle (191) and the suction nozzle (192) that form a cleaning nozzle, so that a wall of each of the supply nozzle (191) and the suction nozzle (192) is thickened to increase the volume occupied by the nozzle in the cuvette 21. Thus, a percentage of the cleaning liquid (Ls) in the cuvette (21) can be reduced, resulting in reducing the amount of the cleaning liquid required for cleaning the cuvette (21).

## Description

### TECHNICAL FIELD

The present invention relates to a cleaning device that cleans inside of a vessel and an analyzer that includes the cleaning device.

### BACKGROUND ART

Conventionally, an analyzer that dispenses a reagent and a specimen into a cuvette and optically detects a reaction of the reagent and the specimen in the cuvette has been known as a device that automatically analyzes a specimen such as blood or body fluid. In such an analyzer, cleaning is performed so that a cuvette can be used repeatedly. Mixed liquid in the cuvette, for which optical measurement has been finished, is sucked and discharged out through a plurality of cleaning nozzles. Cleaning liquid such as detergent or cleaning water is injected and then is sucked away (see Patent Document 1).

Patent Document 1: Japanese Patent Application Laid-open No. S62-228951

### DISCLOSURE OF INVENTION

### PROBLEM TO BE SOLVED BY THE INVENTION

In the conventional analyzer, a percentage of the cleaning liquid in the cuvette is generally large when the cleaning nozzle is inserted. In other words, nearly the same amount of the cleaning liquid as the inner volume of the cuvette is required to clean the whole inside of the cuvette.

The present invention has been made in view of the above-mentioned problems with the conventional technology. It is an object of the present invention to provide a cleaning device and an analyzer capable of reducing an amount of cleaning liquid required for cleaning a vessel.

### MEANS FOR SOLVING PROBLEM

To solve the problem described above and achieve the object, a cleaning device according to the present invention that cleans inside of a vessel includes a suction nozzle configured to be inserted into the vessel to suck liquid contained in the vessel; and a supply nozzle configured to be inserted into the vessel to supply cleaning liquid into the vessel, wherein at least one of the suction nozzle and the supply nozzle is formed such that a wall cross-sectional area thereof is larger than an inner-diameter cross-sectional area thereof.

In the cleaning device according to the present invention, when the suction nozzle and the supply nozzle are inserted into the vessel, a sum of a volume of a submerged portion of the suction nozzle and a volume of a submerged portion of the supply nozzle is larger than a volume occupied by the liquid in the vessel.

An analyzer according to the present invention that analyzes a liquid specimen contained in a vessel includes any one of the above-described cleaning devices according to the present invention, wherein the cleaning device cleans the vessel, into which the liquid specimen is dispensed in the analyzer.

### EFFECT OF THE INVENTION

According to the present invention, at least one of the suction nozzle and the supply nozzle that form the cleaning nozzle is formed such that the wall cross-sectional area thereof is larger than the inner-diameter cross-sectional area thereof to thicken the wall of the nozzle so that the volume occupied by the nozzle in the vessel can be increased. Therefore, the percentage of cleaning liquid in the vessel can be reduced, resulting in reducing the amount of the cleaning liquid required for cleaning the vessel that is used for an analysis process.

### BRIEF DESCRIPTION OF DRAWINGS

FIG. 1 is a schematic diagram illustrating a configuration of an analyzer according to an embodiment of the present invention.
FIG. 2 is a schematic diagram explaining a configuration of a cleaning unit shown in FIG. 1.
FIG. 3 is a schematic diagram illustrating a cross-sectional shape of each of a supply nozzle and a suction nozzle shown in FIG. 2.
FIG. 4 is a schematic diagram illustrating a cross-sectional shape of each of a supply nozzle and a suction nozzle of a conventional technology.
FIG. 5 is a schematic diagram illustrating a state in which the supply nozzle and the suction nozzle shown in FIG. 4 are inserted into the cuvette.
FIG. 6 is a schematic diagram illustrating a state in which the supply nozzle and the suction nozzle shown in FIG. 3 are inserted into the cuvette.
FIG. 7 is a schematic diagram illustrating another example of the cross-sectional shape of each of the supply nozzle and the suction nozzle shown in FIG. 3.
FIG. 8 is a schematic diagram illustrating a state in which a supply nozzle and a suction nozzle according to the embodiment are inserted into a cuvette.
FIG. 9 is a schematic diagram illustrating a cross-sectional shape of each of the supply nozzle and the suction nozzle shown in FIG. 8.

### EXPLANATIONS OF LETTERS OR NUMERALS

- 1: Analyzer
- 2: Measurement system
- 3: Controller
- 11: Specimen transfer unit
- 11a: Specimen vessel
- 11b: Specimen rack
- 12: Specimen dispensing system
- 12a: Arm
- 13: Reaction table
- 14: Reagent container
- 15: Reagent vessel
- 16: Reagent dispensing system
- 16a: Arm
- 17: Stirring unit
- 18: Photometric unit
- 19: Cleaning unit
- 21: Cuvette
- 31: Control unit
- 32: Input unit
- 33: Analyzing unit
- 35: Storage unit
- 36: Output unit
- 131: Holder
- 191: Supply nozzle
- 191a, 192a, 192d, 193a, 193d: Tube
- 191b: Cleaning liquid vessel
- 191c, 192c, 193c: Open-close valve
- 191d: Pump
- 191, 1191, 2191, 3191: Supply nozzle
- 192, 1192, 3192: Suction nozzle
- 193, 1193: Overflow suction nozzle
- 192b, 193b: Tank
- 194: Up-down moving system
- 195: Drainage vessel
- 196: Vacuum pump

### BEST MODE(S) FOR CARRYING OUT THE INVENTION

Exemplary embodiments of a cleaning device and an analyzer according to the present invention will be described below with reference to the drawings, taking an analyzer that includes a cleaning device that cleans cuvettes into which liquid specimens such as blood or urine are dispensed as an example. The present invention is not limited to the following embodiments. In the descriptions of the drawings, the same components are denoted with the same reference symbols.

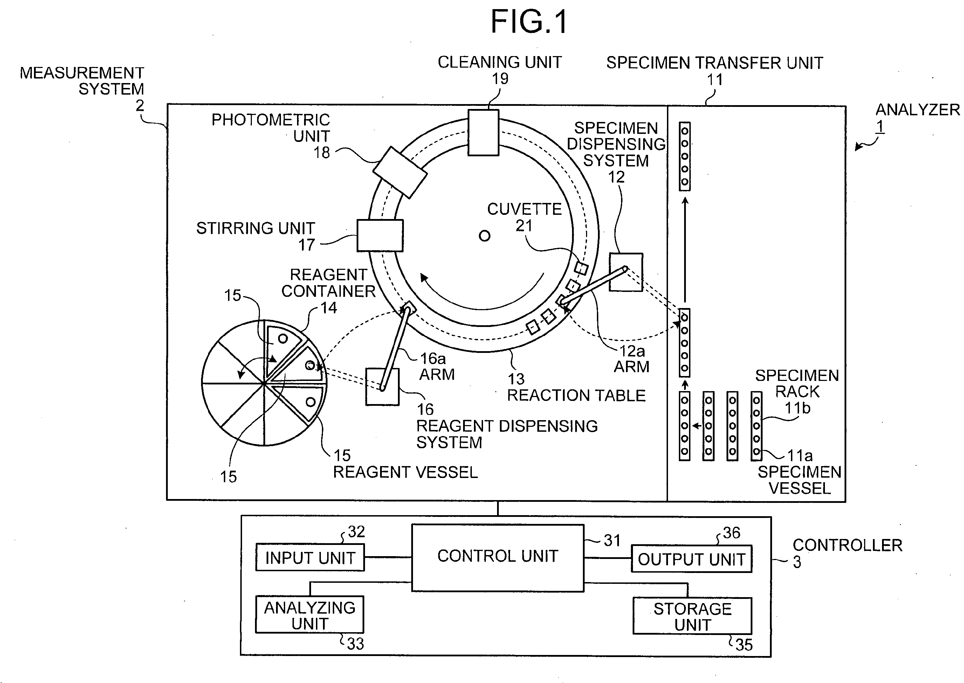

FIG. 1 is a schematic diagram illustrating a configuration of an analyzer 1 according to an embodiment of the present invention. As shown in FIG. 1, the analyzer 1 of the present embodiment includes a measurement system 2 that dispenses a specimen and a reagent as analysis objects into each of cuvettes 21 and optically measures a reaction that takes place in each of the cuvettes 21 into which the specimen and the reagent are dispensed. The analyzer 1 also includes a controller 3 that controls the entire analyzer 1 including the measurement system 2 and analyzes a result of measurement performed by the measurement system 2. The analyzer 1 automatically performs biochemical analysis on a plurality of specimens due to cooperation between the above two systems. Each of the cuvettes 21 is a vessel with an extremely small capacity ranging from a few nL (nanoliters) to a few mL (milliliters). The cuvette 21 is made of transparent material capable of transmitting not less than 80% of light contained in analysis light (340 to 800 nm) emitted from a light source of a photometric unit 18. Examples of the transparent material include glass including heat-resistant glass, and synthetic resin including cyclic olefin and polystyrene. Each of the cuvettes 21 includes a liquid holding portion for holding liquid by a side wall and a bottom wall thereof, and an opening that is formed on an upper portion of the liquid holding portion.

The measurement system 2 is now described. The measurement system 2 mainly includes a specimen transfer unit 11, a specimen dispensing system 12, a reaction table 13, a reagent container 14, a reagent dispensing system 16, a stirring unit 17, the photometric unit 18, and a cleaning unit 19.

The specimen transfer unit 11 includes a plurality of specimen racks 11b, each of which carries a plurality of specimen vessels 11a each containing a liquid specimen such as blood and is sequentially transferred in a direction indicated by an arrow in the drawing by a not-shown transfer system. A specimen contained in the specimen vessel 11a that has been transferred to a predetermined position on the specimen transfer unit 11 is dispensed into the cuvette 21 to be conveyed in an aligned state on the reaction table 13.

The specimen dispensing system 12 has an arm 12a that is movable up and down in a vertical direction and rotatable about a vertical line that passes through a base end portion thereof as a central axis. At a tip end portion of the arm 12a, a nozzle through which a specimen is sucked in and discharged out is attached. The specimen dispensing system 12 has a not-shown sucking-discharging system that uses a sucking-discharging syringe or a piezoelectric device. The specimen dispensing system 12 sucks in a specimen through the nozzle from the specimen vessel 11a that has been transferred to the predetermined position on the specimen transfer unit 11 as described above, and discharges out to dispense the specimen into the cuvette 21 by rotating the arm 12a in a clockwise direction in the drawing.

The reaction table 13 transfers the cuvette 21 to predetermined positions to perform dispensation of a specimen or a reagent to the cuvette 21, stirring, optical measurement, cleaning, or optical measurement for detecting unwanted material, with respect to the cuvette 21. The reaction table 13 is rotatable about a vertical line that passes through the center of the reaction table 13 as a rotation axis by driving of a not-shown driving system with a control by a control unit 31. An openable and closable lid and a thermostatic bath not shown are provided above and below the reaction table 13, respectively.

The reagent container 14 can house a plurality of reagent vessels 15, each of which contains a reagent to be dispensed into the cuvettes 21. In the reagent container 14, plural rooms are arranged at regular intervals, and in each of the rooms, the reagent vessel 15 is detachably housed. The reagent container 14 is rotatable in a clockwise or counterclockwise direction about a vertical line that passes through the center of the reagent container 14 as a rotation axis by driving of a not-shown driving system with a control by the control unit 31. The regent container 14 transfers a desirable one of the reagent vessels 15 to a reagent sucking position for the reagent dispensing system 16. Above the reagent container 14, an openable and closable lid (not shown) is provided. Also, under the reagent container 14, a cool box is provided. Therefore, when the reagent vessel 15 is housed inside the reagent container 14 and the reagent container 14 is closed with the lid, a reagent contained in the reagent vessel 15 is cooled so that evaporation and degeneration of the reagent contained in the reagent vessel 15 can be suppressed.

The reagent dispensing system 16 has, similarly to the specimen dispensing system 12, an arm 16a to which a reagent nozzle through which a reagent is sucked in and discharged out is attached at a tip end portion thereof. The arm 16a is movable up and down in a vertical direction and rotatable about a vertical line that passes through a base end portion thereof as a central axis. The reagent dispensing system 16 sucks in a reagent in the reagent vessel 15 that has been moved to a predetermined position on the reagent container 14 through the nozzle. The reagent dispensing system 16 discharges out to dispense the reagent into the cuvette 21 that has been conveyed to a predetermined position on the reaction table 13 by rotating the arm 16a in a clockwise direction in the drawing. The stirring unit 17 stirs the specimen and the reagent that are dispensed into the cuvette 21 to promote reaction.

The photometric unit 18 irradiates the cuvette 21 that has been conveyed to a predetermined optical measurement position with analysis light (340 to 800 nm), disperses light that has transmitted through liquid in the cuvette 21, and measures intensity of light of each wavelength using a photodetecting element such as PDA (Photo Diode Array). Thus, absorbance of a wavelength that is specific to the reaction liquid of the specimen and the reagent, which is an analysis object, is measured.

The cleaning unit 19 sucks in and discharges out mixed liquid in the cuvette 21, for which measurement by the photometric unit 18 has been finished. The cleaning unit 19 injects cleaning liquid such as detergent or cleaning water into the cuvette 21 and then sucks it away to thereby clean the cuvette 21, for which an analysis process has been finished.

Next, the controller 3 is described. The controller 3 includes the control unit 31, an input unit 32, an analyzing unit 33, a storage unit 35, and an output unit 36. Each of components in the measurement system 2 and the controller 3 is electrically connected to the control unit 31.

The control unit 31 is formed with a use of a CPU and the like, and controls processing and operations of each of components in the analyzer 1. The control unit 31 performs predetermined input and output control of information to be input to and output from each of the components, and also performs predetermined information processing on the information. The input unit 32 is formed with a use of a keyboard, a mouse, and the like, and acquires various kinds of information required for analyzing a specimen, instruction information for an analysis operation, and the like from an external source. The analyzing unit 33 performs a component analysis and the like of a specimen based on the absorbance measured by the photometric unit 18. The storage unit 35 is formed with a use of a hard disk that magnetically stores therein information, and a memory that loads, when the analyzer 1 performs processing, various kinds of computer programs related to the processing from the hard disk to electrically store therein. The storage unit 35 stores various kinds of information including a result of analysis of a specimen. The storage unit 35 can include an auxiliary storage device that can read information stored in a storage medium such as a CD-ROM, a DVD-ROM, and a PC card. The output unit 36 is formed with a use of a display, a printer, a speaker, and the like, and outputs various kinds of information including a result of analysis of a specimen. The output unit 36 outputs various kinds of information to an external device via a not-shown communication network.

In the analyzer 1 configured as described above, the specimen dispensing system 12 dispenses a specimen contained in each of the specimen vessels 11a and the reagent dispensing system 16 dispenses a reagent contained in each of the reagent vessels 15, into each of the cuvettes 21 that are sequentially conveyed in an aligned state. Then, the photometric unit 18 measures spectral intensity of the specimen while the specimen and the reagent react with each other. The analyzing unit 33 analyzes a result of the measurement, so that component analysis and the like of the specimen can be performed. This operation is performed automatically with a control by the controller 3. The cleaning unit 19 cleans the cuvettes 21, which have been conveyed after the measurement by the photometric unit 18 is finished, while conveying the cuvettes 21. Thus, a series of analysis operation is repeatedly performed successively.

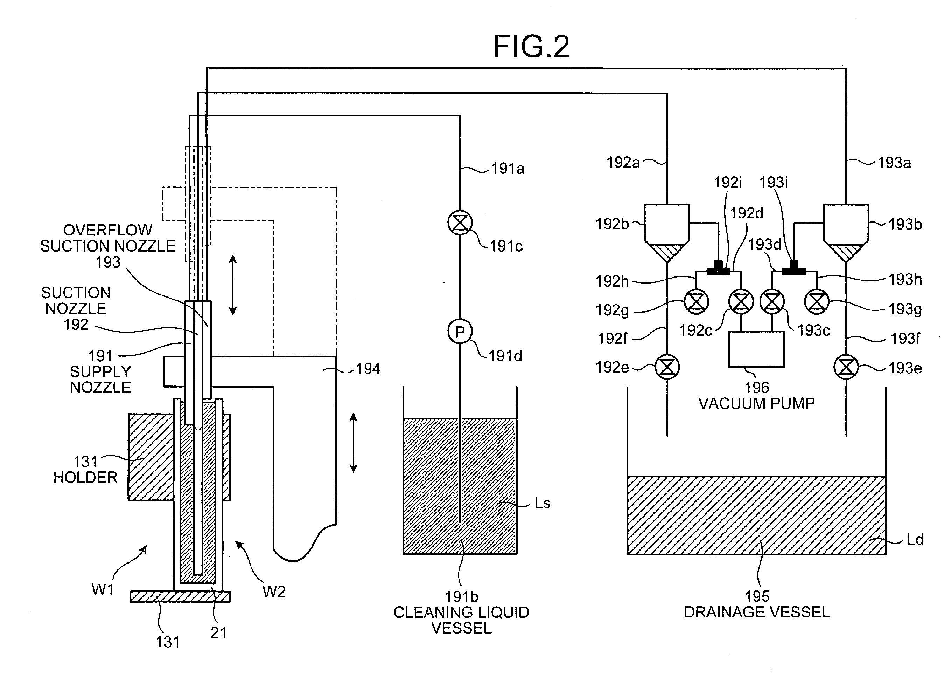

Next, the cleaning unit 19 shown in FIG. 1 is described. FIG. 2 is a schematic diagram explaining a configuration of the cleaning unit 19 shown in FIG. 1. As shown in FIG. 2, the cleaning unit 19 shown in FIG. 1 is mounted on a holder 131 that forms the reaction table 13. The cleaning unit 19 has three cleaning nozzles including a supply nozzle 191, a suction nozzle 192, and an overflow suction nozzle 193, as cleaning nozzles for cleaning the cuvette 21 that has been conveyed to a cleaning position. On the holder 131, photometric windows W1 and w2 that form paths of incident light on the cuvette 21 and transmitted light transmitted from the cuvette 21 are formed to perform optical measurement.

The supply nozzle 191 is configured to be inserted into the cuvette 21 to supply cleaning liquid into the cuvette 21. The suction nozzle 192 is configured to be inserted into the cuvette 21 to suck in liquid as a discharging object in the cuvette 21. The overflow suction nozzle 193 sucks in an overflow portion of the cleaning liquid so that the cleaning liquid does not overflow from the cuvette 21. The cleaning unit 19 includes an up-down moving system 194 that integrally moves up and down the three cleaning nozzles. The cleaning unit 19 performs a cleaning process on the cuvette 21 by causing the up-down moving system 194 to integrally move up and down the three cleaning nozzles so that a cleaning-liquid supply process by the supply nozzle 191, a drainage suction process by the suction nozzle 192, and a suction process of sucking an overflow liquid at an overflow height position by the overflow suction nozzle 193 can smoothly be performed.

The supply nozzle 191 is connected to a cleaning liquid vessel 191b that houses cleaning liquid Ls via a tube 191a. On the tube 191a, an open-close valve 191c that controls a supply process of the cleaning liquid Ls and a pump 191d that performs sucking and discharging operation of the cleaning liquid Ls with respect to the cleaning liquid vessel 191b are mounted. When the open-close valve 191c is opened, the cleaning liquid Ls that has been sucked in by the pump 191d is supplied from the supply nozzle 191 into the cuvette 21.

The suction nozzle 192 is connected to a drainage vessel 195 that collects drainage Ld via a tube 192a. On the tube 192a, a tank 192b for temporarily collecting drainage is mounted. The tank 192b is connected to, via a tube 192f, an open-close valve 192e that is to be opened when the temporarily-collected drainage is drained to the drainage vessel 195. The tank 192b is also connected to, via a tube 192d, an open-close valve 192c that is to be opened when liquid in the cuvette 21 is sucked in by the suction nozzle 192, and a vacuum pump 196. A tube 192h is branched from the tube 192d in a distribution connector 192i. The tube 192d is connected to an air open valve 192g via the branched tube 192h. One tube connecting port of the air open valve 192g is connected to atmosphere. When the open-close valve 192c is opened while the air open valve 192g and the open-close valve 192e are closed, the liquid that has been sucked in from the cuvette 21 by the suction nozzle 192 is sucked in by a suction process by the vacuum pump 196, and collected in the tank 192b. When the open-close valve 192c is closed and the air open valve 192g is opened after suction operation has been finished, a vacuum state in a pipeline from the suction nozzle 192 to the tank 192b can be relieved. Then, when the open-close valve 192e is opened, the liquid collected in the tank 192b flows down towards the drainage vessel 195 by gravity.

The overflow suction nozzle 193 is connected to the drainage vessel 195 that collects the drainage Ld via a tube 193a. On the tube 193a, a tank 193b for temporarily collecting drainage is mounted. The tank 193b is connected to, via a tube 193f, an open-close valve 193e that is to be opened when the temporarily-collected drainage is drained to the drainage vessel 195. The tank 193b is also connected to, via a tube 193d, an open-close valve 193c that is to be opened when the liquid in the cuvette 21 is sucked in by the overflow suction nozzle 193, and the vacuum pump 196. A tube 193h is branched from the tube 193d in a distribution connector 193i. The tube 193d is connected to an air open valve 193g via the branched tube 193h. One tube connecting port of the air open valve 193g is connected to atmosphere. When the open-close valve 193c is opened while the air open valve 193g and the open-close valve 193e are closed, the liquid that has been sucked in from the cuvette 21 by the overflow suction nozzle 193 is sucked in by a suction process by the vacuum pump 196, and collected in the tank 193b. When the open-close valve 193c is closed and the air open valve 193g is opened after suction operation has been finished, a vacuum state in a pipeline from the suction nozzle 193 to the tank 193b can be relieved. Then, when the open-close valve 193e is opened, the liquid collected in the tank 193b flows down towards the drainage vessel 195 by gravity.

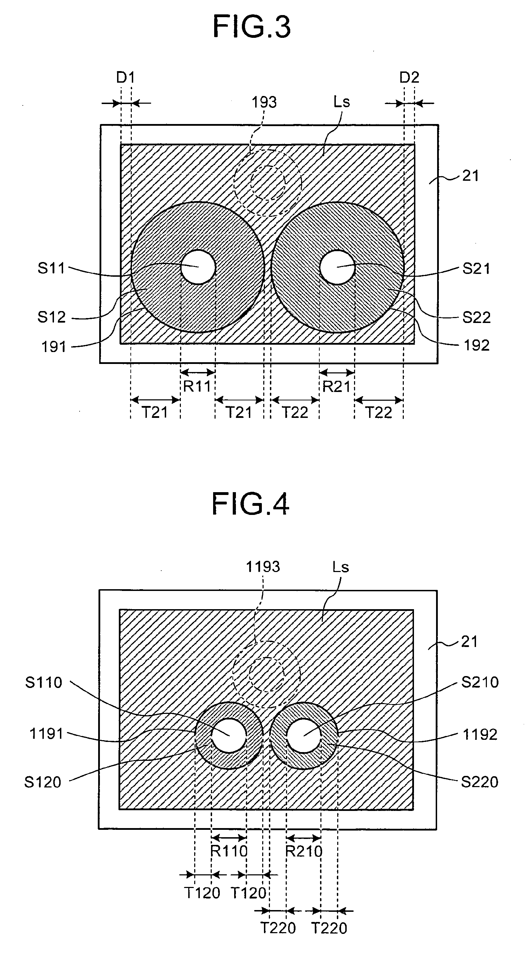

Next, shapes of the supply nozzle 191 and the suction nozzle 192 are described. FIG. 3 is a schematic diagram illustrating a cross-sectional shape of each of the supply nozzle 191 and the suction nozzle 192. In FIG. 3, a state in which the supply nozzle 191 and the suction nozzle 192 are inserted into the cuvette 21 that is filled with the cleaning liquid Ls is illustrated. The overflow suction nozzle 193 is located at a position of an opening portion of the cuvette 21 to suck in an overflow portion of the cleaning liquid, so that the overflow suction nozzle 193 is not inserted into a position of the cleaning liquid Ls filled in the cuvette 21. Therefore, the overflow suction nozzle 193 is illustrated in a chain double-dashed line in FIG. 3.

As shown in FIG. 3, in the cleaning unit 19, a wall of each of the supply nozzle 191 and the suction nozzle 192 is thickened to increase the volume of a submerged portion of the supply nozzle 191 and the volume of a submerged portion of the suction nozzle 192 when the supply nozzle 191 and the suction nozzle 192 are inserted into the cuvette 21. Specifically, in the supply nozzle 191, an inner diameter R11 and a wall thickness T21 are set so that a wall cross-sectional area S12 becomes larger than an inner-diameter cross-sectional area S11 of the supply nozzle 191 as shown in FIG. 3. Furthermore, in the suction nozzle 192, an inner diameter R21 and a wall thickness T22 are set so that a wall cross-sectional area S22 becomes larger than an inner-diameter cross-sectional area S21 of the suction nozzle 192. A distance D1 between the supply nozzle 191 and an inner wall of the cuvette 21 and a distance D2 between the suction nozzle 192 and the inner wall of the cuvette 21 can be set such that the cleaning liquid Ls can flow therethrough.

Here, a shape of a cleaning nozzle of a conventional analyzer is described. FIG. 4 is a schematic diagram illustrating a cross-sectional shape of each of a conventional supply nozzle and a conventional suction nozzle. In FIG. 4, an overflow suction nozzle 1193 is illustrated in a chain double-dashed line similarly to FIG. 3.

As shown in FIG. 4, a supply nozzle 1191 and a suction nozzle 1192 that respectively have thin walls have conventionally been used. In the supply nozzle 1191, a wall thickness T120 is extremely smaller than a value of an inner diameter R110 of the supply nozzle 1191, so that a wall cross-sectional area S120 of the supply nozzle 1191 becomes smaller than an inner-diameter cross-sectional area S110 of the supply nozzle 1191. Similarly, in the suction nozzle 1192, a wall thickness T220 is extremely smaller than a value of an inner diameter R210 of the suction nozzle 1192, so that a wall cross-sectional area S220 of the suction nozzle 1192 becomes smaller than an inner-diameter cross-sectional area S210 of the suction nozzle 1192.

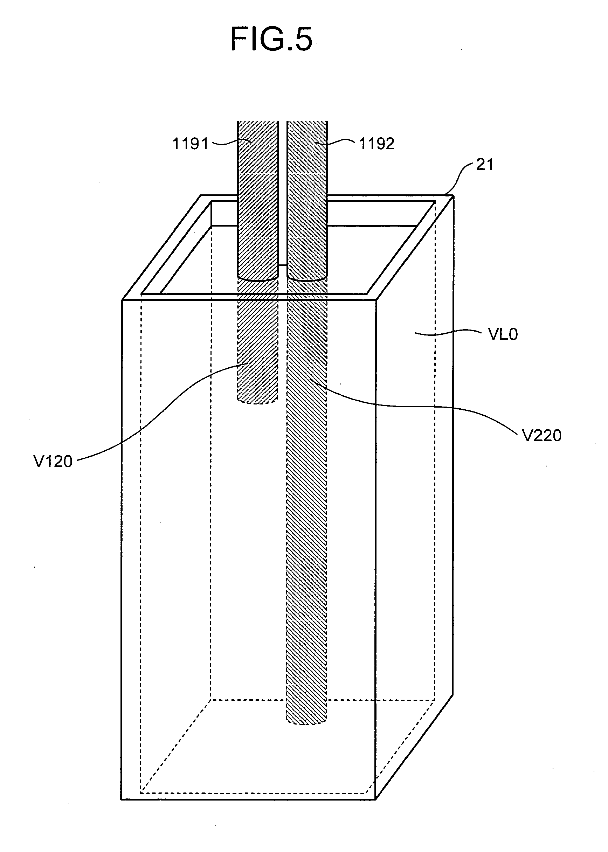

As described, the supply nozzle 1191 and the suction nozzle 1192 that respectively have thin walls have conventionally been used, so that, as shown in FIG. 5, a volume VL0 occupied by the cleaning liquid Ls in the cuvette 21 becomes extremely larger than a sum of a volume V120 of a submerged portion of the supply nozzle 1191 and a volume V220 of a submerged portion of the suction nozzle 1192 in the cuvette 21. Unwanted material on a surface of an inner wall of the cuvette 21 can be sufficiently removed if the cleaning liquid Ls flow over the surface of the inner wall of the cuvette 21. However, nearly the same amount of the cleaning liquid Ls as the inner volume of the cuvette 21, which is extremely larger than the amount by which cleaning can actually be performed, has had to be used because the supply nozzle 1191 and the suction nozzle 1192 that respectively have thin walls are used and the sum of the volume of the submerged portions of the supply nozzle 1191 and the suction nozzle 1192 is small as shown in FIG. 5.

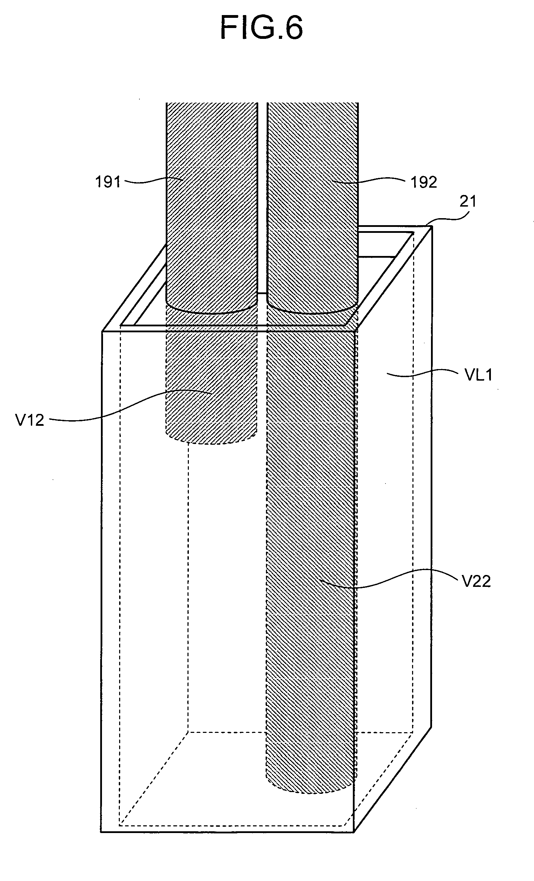

In contrast, in the analyzer 1 of the present embodiment, as shown in FIG. 3, the wall thickness of each of the supply nozzle 191 and the suction nozzle 192 is thickened so that the wall cross-sectional area can be made larger than the inner cross-sectional area. Therefore, as shown in FIG. 6, in the present embodiment, the volume occupied by the cleaning liquid Ls in the cuvette 21 is small compared to the conventional one. Specifically, a sum of a volume V12 of the submerged portion of the supply nozzle 191 and a volume V22 of the submerged portion of the suction nozzle 192 in a state where the supply nozzle 191 and the suction nozzle 192 are inserted into the cuvette 21 is made larger than a volume VL1 occupied by the cleaning liquid Ls in the cuvette 21 by adjusting the wall thickness of each of the supply nozzle 191 and the suction nozzle 192.

In the present embodiment, the supply nozzle 191 and the suction nozzle 192 that respectively have the wall cross-sectional areas larger than the inner-diameter cross-sectional areas are used. The sum of the volumes of the respective submerged portions of the supply nozzle 191 and the suction nozzle 192 becomes large. Thus, the volume occupied by the cleaning liquid Ls in the cuvette 21 can be reduced as shown in FIG. 6. Therefore, the amount of the cleaning liquid required for cleaning the cuvette 21 can be reduced. As a result, the cleaning liquid vessel 191b to be installed in the analyzer 1 can be downsized.

Furthermore, in the present embodiment, the distance D1 between the supply nozzle 191 and the inner wall of the cuvette 21 and the distance D2 between the suction nozzle 192 and the inner wall of the cuvette 21 are set such that the cleaning liquid Ls can flow over the inner wall of the cuvette 21. Therefore, unwanted material on the surface of the inner wall of the cuvette 21 can be sufficiently removed.

Moreover, in the present embodiment, a liquid amount of the cleaning liquid Ls to be filled in the cuvette 21 can be reduced, so that a time for filling the cuvette 21 with the cleaning liquid Ls can be reduced. Therefore, to the extent that the time for filling is reduced, a time for substituting the cleaning liquid Ls in the cuvette 21, that is, a time for supplying a cleaning liquid by the supply nozzle 191 and a time for sucking in an overflow portion by the overflow suction nozzle 193, can be increased so that the cleaning process can be performed more reliably. Furthermore, in the present embodiment, a filling process and a substitution process can be performed more frequently than the conventional ones within the same cleaning time, so that a cleaning effect can be improved compared to the conventional one.

The thickness of the wall of each of the supply nozzle 191 and the suction nozzle 192 should preferably be set corresponding to the volume of the cuvette 21, a surface area of the cuvette 21, and types and dispense amounts of a reagent and a specimen that are used depending on an analysis item, so that cleaning can be sufficiently performed. The cleaning nozzles are not required to achieve high dispensing accuracy that a dispensing nozzle that dispenses a reagent or a specimen is required to achieve. Thus, even when the walls are thickened as shown in FIG. 3, the cleaning process can be sufficiently performed. Furthermore, in the present embodiment, reducing the thickness of the wall of each cleaning nozzle is not required unlike the conventional one. Therefore, options of material for the cleaning nozzle increase.

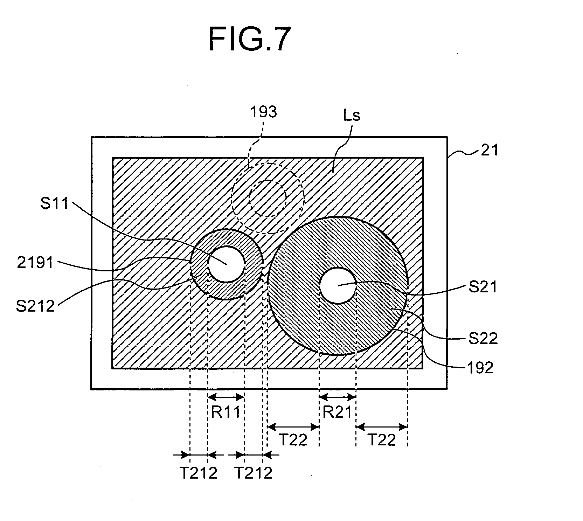

While, in the present embodiment, as shown in FIG. 3, an example is described in which the wall of each of the supply nozzle and the suction nozzle is thickened so that the wall cross-sectional area can be made larger than the inner-diameter cross-sectional area in each of the supply nozzle and the suction nozzle, the present invention is not limited to this example. It is possible to thicken a wall of at least one of the supply nozzle and the suction nozzle so that the wall cross-sectional area can be made larger than the inner-diameter cross-sectional area. For example, as shown in FIG. 7, even when a supply nozzle 2191 in which a wall thickness T212 is made thin and a wall cross-sectional area S212 is made smaller than an inner-diameter cross-sectional area S11 is used similarly to the conventional one, if the suction nozzle 192 that is configured to be inserted into a position close to a bottom wall of the cuvette 21 is formed such that the inner diameter R21 and the wall thickness T22 are set such that the wall cross-sectional area S22 becomes larger than the inner-diameter cross-sectional area S21, the volume occupied by the cleaning liquid Ls in the cuvette 21 can be reduced.

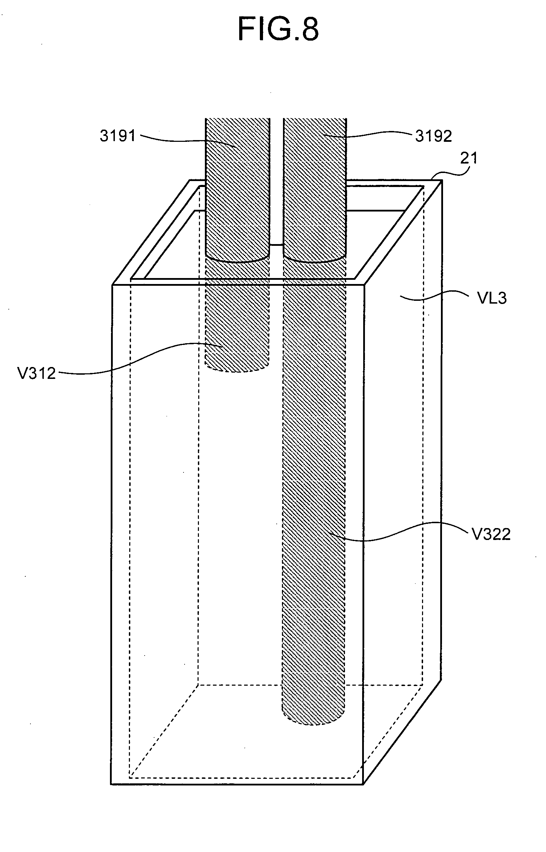

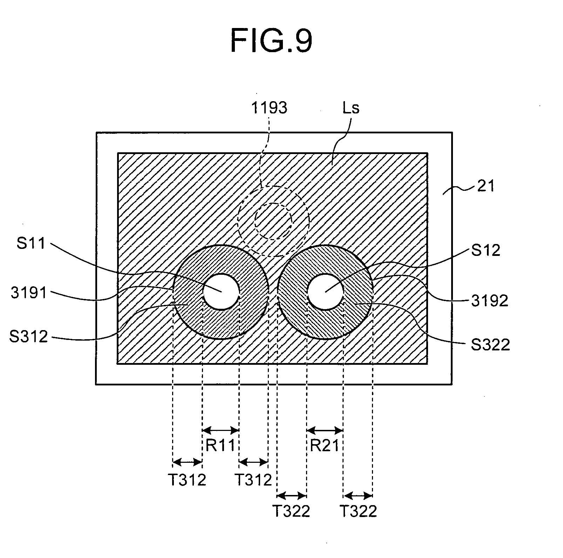

Furthermore, while, in the present embodiment, as shown in FIG. 6, an example is described in which the sum of the volume V12 of the submerged portion of the supply nozzle 191 and the volume V22 of the submerged portion of the suction nozzle 192 is made larger than the volume VL1 occupied by the cleaning liquid Ls in the cuvette 21, the present invention is not limited to this example. To reduce the amount of the cleaning liquid required for the cleaning compared to the conventional one, as shown in FIG. 8, a volume V312 of a submerged portion of a supply nozzle 3191 and a volume V322 of a submerged portion of a suction nozzle 3192 may be increased compared to the volume of the submerged portion of the conventional supply nozzle and the volume of the submerged portion of the conventional suction nozzle, respectively, so that the volume occupied by the cleaning liquid Ls in the cuvette 21 can become a value VL3 that is smaller than the conventional one. Conventionally, the wall thickness of each of the cleaning nozzles is made thin so that the wall cross-sectional area is made smaller than the inner-diameter cross-sectional area. Therefore, to reduce the volume occupied by the cleaning liquid Ls in the cuvette 21 compared to the conventional one, as shown in FIG. 9, the inner diameter R11 and a wall thickness T312 may be set so that a wall cross-sectional area S312 of the supply nozzle 3191 can be made larger than the inner-diameter cross-sectional area S11, or the inner diameter R21 and a wall thickness T322 may be set so that a wall cross-sectional area S322 of the suction nozzle 3192 can be made larger than the inner-diameter cross-sectional area S12.

## Claims

1. A cleaning device that cleans inside of a vessel, the cleaning device comprising:
a suction nozzle configured to be inserted into the vessel to suck liquid contained in the vessel; and
a supply nozzle configured to be inserted into the vessel to supply cleaning liquid into the vessel, wherein
at least one of the suction nozzle and the supply nozzle is formed such that a wall cross-sectional area thereof is larger than an inner-diameter cross-sectional area thereof.

2. The cleaning device according to claim 1, wherein when the suction nozzle and the supply nozzle are inserted into the vessel, a sum of a volume of a submerged portion of the suction nozzle and a volume of a submerged portion of the supply nozzle is larger than a volume occupied by the liquid in the vessel.

3. An analyzer that analyzes a liquid specimen contained in a vessel, the analyzer comprising:
the cleaning device according to claim 1 or 2, wherein
the cleaning device cleans the vessel, into which the liquid specimen is dispensed in the analyzer.
